# DEMANDE DE BREVET EUROPEEN

(11) **EP 2 597 546 A1**
(43) Date de publication de la demande: **29.05.2013**
(21) Numéro de dépôt: 12194014.2
(22) Date de dépôt: 23.11.2012
(51) Int. Cl.: G06F 1/26, H02J 7/02, H02J 13/00

(54) **Module externe de pilotage de l'alimentation d'un équipement muni d'une source d'énergie interne**

(30) Priorité: 23.11.2011 FR 1160696
(71) Demandeur: Bouygues, 75008 Paris (FR)
(72) Inventeur: Surmont, Antoine, 75008 Paris (FR); Braud, Nicolas, 92100 Boulogne Billancourt (FR)
(74) Mandataire: Regimbeau

(57) **Abrégé**

La présente invention concerne un module (5) externe de pilotage de l'alimentation électrique d'un équipement (1) muni d'une source d'énergie interne (2), ledit module (5) comprenant un interrupteur (54) et un calculateur (55), et étant adapté pour être disposé entre une source d'énergie externe (3) et ledit équipement (1), de manière à, en fonction d'une commande qui lui est appliquée, actionner ledit interrupteur (54) pour relier ou déconnecter ledit équipement (1) de la source d'énergie externe (3).

## Description

La présente invention concerne le domaine des modules de pilotage de l'alimentation électrique d'équipements, et trouve une application particulière pour le pilotage de l'alimentation électrique d'ordinateurs portables.

### ETAT DE L'ART

On connait des dispositifs intégrant des moyens de gestion de l'alimentation intégré.
Par exemple, dans le cas d'ordinateurs portables, les documents US 7225086 et US 2003/0090236 présentent de batteries communément qualifiées de « intelligentes », comprenant des moyens de pilotage de l'alimentation de l'ordinateur en fonction de commandes envoyées par l'ordinateur et du niveau de charge de la batterie. Les dispositifs présentés dans ces documents permettent ainsi de réaliser un délestage lors de pics de consommation électrique, en basculant sur une alimentation d'ordinateurs portables à partir de leur batterie au lieu de les alimenter à partir du réseau électrique.

Ces solutions présentent toutefois des inconvénients, en ce qu'elles requièrent des équipements particuliers et ne peuvent être mises en oeuvre que sur un groupe d'ordinateurs spécifique et limité, ce qui est contraignant pour la mise en oeuvre d'un délestage électrique à plus grande échelle et donc plus efficace.

### PRESENTATION DE L'INVENTION

La présente invention vise à remédier à ces inconvénients, et propose un module externe de pilotage de l'alimentation électrique d'un équipement muni d'une source d'énergie interne, ledit module comprenant un interrupteur et un calculateur, et étant adapté pour être disposé entre une source d'énergie externe et ledit équipement, de manière à, en fonction d'une commande qui lui est appliquée, actionner ledit interrupteur pour relier ou déconnecter ledit équipement de la source d'énergie externe.

En variante, ledit module comprend :
- un port d'entrée adapté pour être relié à une source d'alimentation électrique,
- un port de sortie adapté pour être relié à un port d'alimentation électrique de l'équipement, ledit interrupteur reliant le port d'entrée et le port de sortie,
- un port de commande adapté pour être relié à un port de pilotage de l'équipement, ledit port de commande étant adapté pour transmettre des données entre ledit équipement et ledit calculateur.

L'invention concerne également un système comprenant :
- un module tel que défini précédemment,
- un équipement muni d'une batterie interne,
- un moyen d'alimentation adapté pour alimenter ledit équipement à partir d'un réseau électrique externe,
ledit module étant disposé entre ledit moyen d'alimentation et ledit équipement, et adapté pour permettre de relier ou d'interrompre l'alimentation dudit équipement par le réseau électrique externe en fonction d'une commande transmise audit module par l'équipement.

En variante, ledit système comprend en outre un serveur adapté pour envoyer ladite commande à l'équipement, ladite commande étant adaptée pour piloter le fonctionnement de l'interrupteur du module en fonction de l'état de charge du réseau électrique externe, de l'état de charge de la batterie interne de l'équipement et de l'état de l'interrupteur du module.
Selon une autre variante, ledit équipement est un ordinateur portable.

L'invention concerne en outre un procédé de pilotage de l'alimentation électrique d'un ensemble d'équipements, comprenant des étapes de :
- détection d'une commande de pilotage,
- détermination du statut d'une pluralité d'équipements munis de sources d'énergie interne, et étant reliés à une source d'énergie externe,
- commutation de l'alimentation de tout ou partie de ladite pluralité d'équipement de sorte que, en fonction de leurs statuts, ils soient alimentés par la source d'énergie externe ou par leur source d'énergie interne,
ledit procédé étant **caractérisé en ce qu'il** met en oeuvre une pluralité de modules externes réalisant la liaison entre chacun desdits équipements et la source d'énergie externe, lesdits modules étant adaptés pour relier ou isoler lesdits équipements de la source d'énergie externe.

Selon un mode de réalisation particulier, on détermine la durée de fonctionnement restant de chacun des équipements en fonction de leurs caractéristiques de fonctionnement et de l'état de leurs sources d'énergie internes, et en fonction de cette durée de fonctionnement restante, on pilote chacun desdits équipements de sorte que si la durée de fonctionnement déterminée est inférieure à une valeur seuil, ledit équipement soit alimenté par la source d'énergie externe.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 présente un exemple d'application d'un dispositif selon un aspect de l'invention ;
- la figure 2 présente une vue détaillée d'un tel dispositif.

### DESCRIPTION DETAILLEE

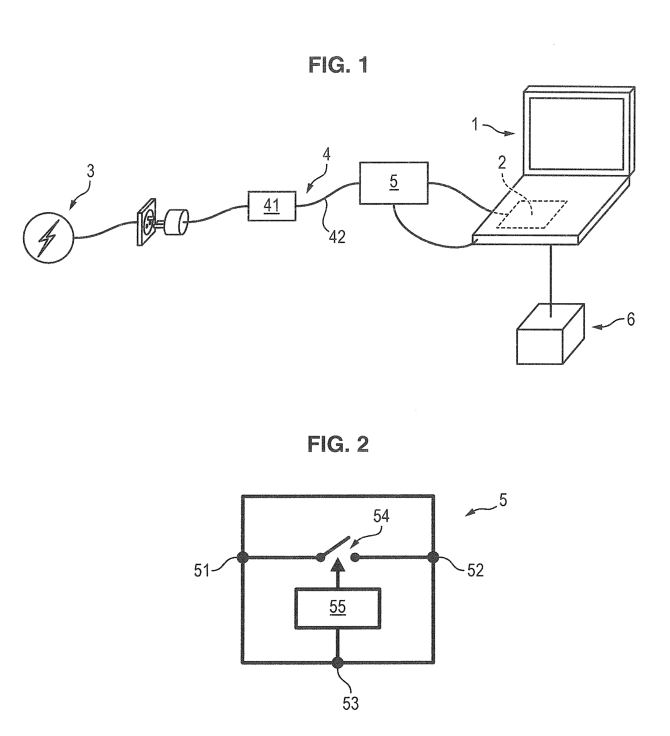

La figure 1 présente un exemple d'application d'un dispositif selon un aspect de l'invention, et la figure 2 présente une vue détaillée d'un tel dispositif.

La figure 1 présente un équipement 1, en l'occurrence un ordinateur portable 1 comprenant une batterie 2 interne, ladite batterie étant reliée à un réseau électrique 3 via un port de charge de l'ordinateur portable 1 par l'intermédiaire d'un chargeur 4 comprenant une alimentation 41 et des câbles électriques 42.

Un module 5 est interposé entre l'alimentation 41 et le port de charge de l'ordinateur portable 1. Le module 5 est relié au réseau électrique 3 via un port d'entrée 51, au port de charge de l'ordinateur portable 1 via un port de sortie 52, et également à un port de pilotage de l'ordinateur 1 via un port de commande 53.

Le port d'entrée 51 et le port de sortie 52 sont typiquement des ports adaptés pour une tension égale à 19.5V et une intensité inférieure à 10A.

Le port d'entrée 51 est relié au port de sortie 52 via un interrupteur 54; typiquement un relais électromécanique.

Le port de commande 53 peut être un port physique (câble) , typiquement un port de type USB (Universal Serial Bus) 5V, relié à un port de pilotage similaire de l'ordinateur portable 1, ou bien il peut être dématérialisé sous forme de lien radio.

Le module 5 comprend un calculateur 55, relié au port de commande 53, et comprenant des moyens d'actionnement de l'interrupteur 54 reliant le port d'entrée 51 et le port de sortie 52. Le calculateur 55 est typiquement un microcontrôleur de type PIC 18F2455, utilisant un protocole d'émulation d'un port série.

L'ordinateur portable 1 communique avec un serveur 6 via un réseau, typiquement un réseau local de type Ethernet, Internet, ou tout autre protocole de communication adapté.

Le serveur 6 est adapté pour communiquer avec une pluralité de dispositifs similaires à l'ordinateur portable 1, et ainsi recueillir et traiter des informations provenant de chacun de ces dispositifs.

Par exemple, le serveur 6 est adapté pour recueillir et traiter les informations suivantes :
- niveau de charge de la batterie 2 du dispositif 1 ;
- utilisation du dispositif ;
- durée restante d'utilisation du dispositif en fonction du type d'utilisation et du niveau de charge de la batterie 2 ;
- état du module 5, et plus particulièrement état de l'interrupteur 54 du module 5 ;
- état de charge du réseau électrique 3 ;
- l'usure de la batterie 2.

En fonction des différentes informations reçues, le serveur envoie une commande à l'ordinateur 1, qui la traite et la transmet à son tour par un port de pilotage au port de commande 53 du module 5. Cette commande est alors traitée par le calculateur 55 du module 5, qui pilote l'interrupteur 54.

L'invention permet ainsi de réaliser un délestage électrique durant les périodes de pics, c'est-à-dire de réduire la consommation électrique durant une période critique et ainsi de la lisser sur la durée, ce qui est avantageux pour la gestion de la production énergétique.

A titre d'exemple, en considérant un parc d'ordinateurs portables similaires à l'ordinateur portable 1 présenté sur la figure 1, chacun de ces ordinateurs portables étant équipé d'une batterie interne 2, d'un chargeur 4 le reliant à un réseau électrique, d'un module 5 disposé entre le chargeur 4 et l'ordinateur 1, et étant adapté pour communiquer avec un serveur 6.

Lors de plages horaires définies, typiquement à 8H et 19H, le serveur 6 envoie une requête à chacun des ordinateurs 1, adaptée pour, en fonction de l'état du module 5, de la batterie 2 et de l'ordinateur 1 piloter l'interrupteur 54 du module 5.

Par exemple, le serveur 6 recueille les informations, puis, à condition que :
- l'interrupteur 54 soit fermé,
- la charge de la batterie 2 soit supérieure à un pourcentage donné,
- la durée restante d'utilisation de l'ordinateur 1 alimenté par la batterie 2 soit supérieure à une durée donnée,
le serveur 6 envoie une requête d'ouverture de l'interrupteur 54 à l'ordinateur 1.

A l'inverse, à condition :
- que l'interrupteur 54 soit ouvert, et
- que la charge de la batterie 2 soit inférieure à un pourcentage donné,
   ou
- que la durée restante d'utilisation de l'ordinateur 1 alimenté par la batterie 2 soit inférieure à une durée donnée,
le serveur 6 envoie une requête de fermeture de l'interrupteur 54 à l'ordinateur 1.

Cette requête est alors traitée par un pilote de l'ordinateur 1, communiquant avec le module 5 via le port de commande 53, et envoyée au calculateur 55 qui commute ou non l'interrupteur 54 du module 5 en fonction de la commande fournie.

L'ordinateur 1 communique ensuite à intervalle régulier avec le serveur 6, pour réactualiser les informations fournies. Le serveur 6 peut ainsi actualiser la commande, par exemple en basculant l'interrupteur 54 en position fermée si la batterie 2 de l'ordinateur 1 atteint une valeur de charge trop faible, ou au contraire l'ouvrir si la batterie 2 a une charge suffisante.

Une fois que la plage horaire lors de laquelle le délestage électrique est requis est écoulée, le serveur 6 envoie alors une requête aux différents ordinateurs 1 qui y sont connectés de manière à piloter la fermeture des interrupteurs 54 des modules 5, afin de recharger la batterie 2.

Le module 5 tel que décrit peut être utilisé pour le pilotage de l'alimentation de nombreux équipements comprenant une batterie interne ou externe et des moyens de traitement de l'information. On comprend donc bien que l'invention ne se limite pas à une application à des ordinateurs portables, mais peut également s'appliquer à de nombreux équipements tels que des téléphones portables, tablettes, ou plus généralement aux équipements pouvant fonctionner sur batterie.

L'invention permet ainsi de réaliser un délestage électrique en exploitant les batteries de dispositifs électriques tels que des ordinateurs portables, sans être limité à des batteries spécifiques de type « intelligentes » qui ne concernent qu'un parc réduit d'équipements.

## Revendications

1. Module (5) externe de pilotage de l'alimentation électrique d'un équipement (1) muni d'une source d'énergie interne (2), ledit module (5) comprenant un interrupteur (54) et un calculateur (55), et étant adapté pour être disposé entre une source d'énergie externe (3) et ledit équipement (1), de manière à, en fonction d'une commande qui lui est appliquée, actionner ledit interrupteur (54) pour relier ou déconnecter ledit équipement (1) de la source d'énergie externe (3).

2. Module (5) externe selon la revendication 1, dans lequel ledit module (5) comprend :
- un port d'entrée (51) adapté pour être relié à une source d'alimentation électrique (3),
- un port de sortie (52) adapté pour être relié à un port d'alimentation électrique de l'équipement (1), ledit interrupteur (54) reliant le port d'entrée (51) et le port de sortie (52),
- un port de commande (53) adapté pour être relié à un port de pilotage de l'équipement (1), ledit port de commande (53) étant adapté pour transmettre des données entre ledit équipement (1) et ledit calculateur (55).

3. Système comprenant :
- un module (5) selon l'une des revendications précédentes,
- un équipement (1) muni d'une batterie interne (2),
- un moyen d'alimentation (4) adapté pour alimenter ledit équipement (1) à partir d'un réseau électrique externe (3),
ledit module (5) étant disposé entre ledit moyen d'alimentation (4) et ledit équipement (1), et adapté pour permettre de relier ou d'interrompre l'alimentation dudit équipement (1) par le réseau électrique externe (3) en fonction d'une commande transmise audit module (5) par l'équipement (1).

4. Système selon la revendication 3, comprenant en outre un serveur (6) adapté pour envoyer ladite commande à l'équipement (1), ladite commande étant adaptée pour piloter le fonctionnement de l'interrupteur (54) du module (5) en fonction de l'état de charge du réseau électrique externe (3), de l'état de charge de la batterie interne (2) de l'équipement (1) et de l'état de l'interrupteur (54) du module (5).

5. Système selon l'une des revendications 3 ou 4, dans lequel ledit équipement (1) est un ordinateur portable.

6. Procédé de pilotage de l'alimentation électrique d'un ensemble d'équipements, comprenant des étapes de :
- détection d'une commande de pilotage,
- détermination du statut d'une pluralité d'équipements munis de sources d'énergie interne, et étant reliés à une source d'énergie externe,
- commutation de l'alimentation de tout ou partie de ladite pluralité d'équipement de sorte que, en fonction de leurs statuts, ils soient alimentés par la source d'énergie externe ou par leur source d'énergie interne,
ledit procédé étant **caractérisé en ce qu'il** met en oeuvre une pluralité de modules externes réalisant la liaison entre chacun desdits équipements et la source d'énergie externe, lesdits modules étant adaptés pour relier ou isoler lesdits équipements de la source d'énergie externe.

7. Procédé selon la revendication 6, dans lequel on détermine la durée de fonctionnement restant de chacun des équipements en fonction de leurs caractéristiques de fonctionnement et de l'état de leurs sources d'énergie internes, et en fonction de cette durée de fonctionnement restante, on pilote chacun desdits équipements de sorte que si la durée de fonctionnement déterminée est inférieure à une valeur seuil, ledit équipement soit alimenté par la source d'énergie externe.
